# EUROPEAN PATENT SPECIFICATION

(11) **EP 3 967 962 B1**
(45) Date of publication and mention of the grant of the patent: **23.08.2023**
(21) Application number: 21195805.3
(22) Date of filing: 09.09.2021
(51) Int. Cl.: F28F 9/26, F28F 9/02

(54) **A COUPLING ARRANGEMENT, A TUBULAR HEAT EXCHANGER AND A METHOD FOR HEAT TREATING A FOOD PRODUCT**
KOPPLUNGSVORRICHTUNG, ROHRFÖRMIGER WÄRMETAUSCHER UND VERFAHREN ZUR WÄRMEBEHANDLUNG EINES LEBENSMITTELPRODUKTS
AGENCEMENT DE COUPLAGE, ÉCHANGEUR DE CHALEUR TUBULAIRE ET PROCÉDÉ DE TRAITEMENT THERMIQUE D'UN PRODUIT ALIMENTAIRE

(30) Priority: 10.09.2020 EP 20195443
(43) Date of publication of application: 16.03.2022
(73) Proprietor: Tetra Laval Holdings & Finance S.A., 1009 Pully (CH)
(72) Inventor: Larsson, Peter Mikael, 227 62 Lund (SE)
(74) Representative: Tetra Pak - Patent Attorneys SE

(56) References cited:
- EP-A1- 2 607 833
- DE-A1-102005 059 463
- DE-U1- 9 403 913
- DE-U1-202020 000 985
- US-A- 4 119 141
- US-A- 4 573 527

## Description

### Technical Field

The invention relates to tubular heat exchangers for food processing. More particularly, it is related to a coupling arrangement, a tubular heat exchanger and a method for heat treating a food product.

### Background Art

Today it is common practice to use tubular heat exchangers for food processing applications. The tubular heat exchangers provide both reliable operation and cost efficiency. The tubular heat exchanger typically comprises a plurality of tube bundles in which food product is transferred. Each tube bundle comprises a number of parallel tubes. In outer shells provided outside the tube bundles, a heat transfer media can be provided such that the food product in the tube bundle can be heated such that bacteria, spores and other microorganisms that can lead to health issues are eliminated. By choosing diameters of the tubes based on properties of the food product and also providing flow directing grooves on the tubes, the food product can be heat treated efficiently. For some products, it is also possible to make use of so-called regeneration where already heated food product is used for heating food product that has not yet been heated.

Another advantage with at least some of the tubular heat exchangers offered today is versatility. Since a module-based approach can be used, it is possible to easily replace e.g. tube bundles in case a different kind of product is to be processed. Thus, investing in a tubular heat exchanger is often a good choice since this may be useful even if a different types of product are to be processed.

Even though there are many advantages associated with tubular heat exchangers, high-viscous products, such as yoghurt, may prove difficult to heat treat by tubular heat exchangers. This results in that scraped surface heat exchangers or other equipment specifically configured for high viscous products are often used. A drawback with this is that operational costs usually increase and that the versatility of such equipment has limited versatility. Relevant prior art is reflected in patent documents US4573527A1, on which the preamble of claim 1 is based, US4119141A1 and EP260783A1

### Summary

It is an object of the invention to at least partly overcome one or more of the above-identified limitations of the prior art. In particular, it is an object to provide a coupling arrangement that enables a tubular heat exchanger to run at higher pressures, such as above 200 bar, such that high viscous products, e.g. products having a viscosity of 100 cP at 40 °C, can be heat treated in the tubular heat exchanger.

This has been achieved by designing a new pipe coupling arrangement such that forces formed by the high pressure can be handled reliably. The design does not only provide a more versatile piece of equipment in terms of products that can be processed, but also in terms of operator safety where equipment working at pressures above 200 can be safely employed.

According to a first aspect it is provided a coupling arrangement comprising a tube plate arranged to be attached to a tube bundle, a first groove formed in a surface of the tube plate, a flange arranged to accommodate an end section of the tube plate, and provided with holes for receiving fastening means, an anchoring ring arranged to be placed around the tube plate and provided with holes for receiving the fastening means for attachment to the flange, a retaining element comprising an inner section and an outer section, wherein the inner section is arranged be placed in the first groove of the tube plate, wherein the retaining element comprises a first part and a second part, and a second groove formed by the flange and the anchoring ring in combination, and arranged to accommodate the outer section of the retaining element. Each of the first part and the second part has a semi annular shape.

An advantage with the coupling arrangement is that at least some of the food products requiring a high pressure to be fed through tubes can with this coupling arrangement be heat treated in a tubular heat exchanger. A reason for this is that the coupling arrangement can withstand a high pressure, such as 200 bar or above, inside the tube bundle.

At least one of the flange and the anchoring ring may be provided with a radial retaining element abutment surface for preventing radial movement of the retaining element when the anchoring ring is attached to the flange.

The flange may be provided with a radial tube plate abutment surface and an axial tube plate abutment surface arranged to face the tube plate.

The flange may be provided with a seal groove arranged to accommodate a sealing, wherein the axial tube plate abutment surface may be arranged to prevent movement of the tube plate in an axial direction A, thereby reducing a force F exerted by the tube plate onto the sealing.

An outer section depth OSD of the outer section may be greater than an inner section depth ISD of the inner section of the retaining element.

The fastening means and the holes of the anchoring ring may be threaded and arranged to interact for attaching the anchoring ring to the flange.

An advantage with this is that the fastening means can easily be mounted without the need for the operator to reach in behind the anchoring ring.

According to a second aspect it is provided a tubular heat exchanger comprising a coupling arrangement according to the first aspect, a tube bundle arranged to transfer a food product, and attached to the tube plate, an outer shell arranged to enclose the tube bundle and a heat transfer medium, and a pipe attached to the flange.

In line with the advantages presented with reference to the first aspect, by using the coupling arrangement according to the first aspect it is possible to increase the pressure P inside the tube bundle. This provides for that high viscous products presently not possible to heat treat in tubular heat exchangers can be heat treated with this cost efficient heat exchanger type.

According to a third aspect it is provided a method for heat treating a food product with a tubular heat exchanger according to the second aspect. The food product has a viscosity greater than 100 cP at temperature of 40 °C, and the method comprises: feeding the food product from the pipe into the tube bundle via the coupling arrangement; transferring the food product through the tube bundle; heating a heat transfer medium, and feeding the heat transfer medium into the outer shell, such that the food product is heated to reduce microorganisms in the food product.

The pressure P inside the tube bundle may be above 200 bar. A pressure P' in the outer shell may be below 30 bar.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a perspective view of a tubular heat exchanger.
Fig. 2a is an exploded view of a coupling arrangement.
Fig. 2b is a perspective view of the coupling arrangement.
Fig. 3 is a cross-sectional view of the coupling arrangement attached to a tube bundle and to a connection pipe.
Fig. 4 is a detailed cross-sectional view of the coupling arrangement according to a first embodiment.
Fig. 5 is a detailed cross-sectional view of the coupling arrangement according to a second embodiment.
Fig. 6 is a detailed cross-sectional view of the coupling arrangement according to a third embodiment.
Fig. 7 is a flow chart of a method for heat treating a food product.

### Detailed description

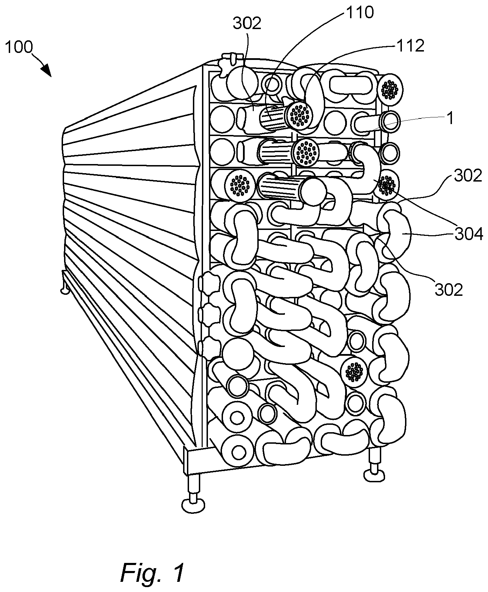

With reference to Fig. 1 a tubular heat exchanger 100 that includes a coupling arrangement 1 is shown. The tubular heat exchanger 100 may be a tubular heat exchanger of the kind named Tetra Spiraflo^{™}, marketed and sold by the company Tetra Pak.

The tubular heat exchanger 100 has a number of tube bundles 110 that are connected to a respective tube plate 112, for example by welding. Each tube bundle 110 has an outer shell 302 that encloses the tube bundle 110. Tube bundles 110 are connected to each other via connection pipes 304. Food product FP can thereby flow from one tube bundle to another tube bundle. Each tube bundle 110 comprises a numbers if straight pipes that are arranged in parallel. The connection pipes 304 are connected to the tube bundles via coupling arrangements 1. The outer shell 302 surrounds the tube bundle 110 such that a heat transfer media HTM, e.g. hot water, can be passed within the outer shell 302 and around the tube bundle 110.

The tubular heat exchanger 100 may operate under conditions where the coupling arrangement 1 have shown particularly advantageous, in particular when considering sanitary- and pressure-handling aspects as well as when considering the total cost of the tubular heat exchanger 100.

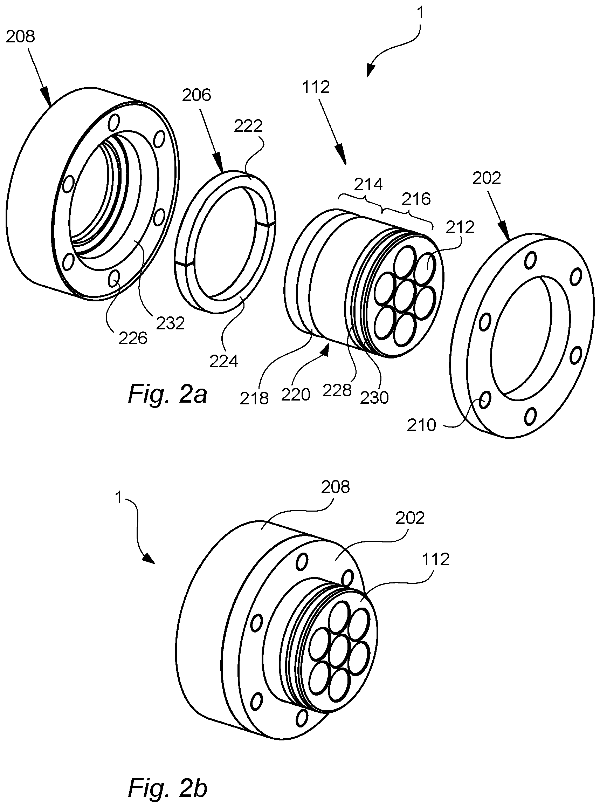

Fig. 2a illustrates the coupling arrangement 1 in further detail. In addition to the tube plate 112, the coupling arrangement 1 comprises an anchoring ring 202, a retaining element 206 and a flange 208. The tube plate 112 can be arranged to be placed within the flange 208 and the anchoring ring 202 IS arranged to be placed over the tube plate 112 and attached to the flange 208. The anchoring ring 202 can be provided with holes 210 for fastening means for this purpose.

The tube plate 112 is be provided with holes 212 such the food product can be fed via these holes 212 into the tube bundle 110. The tubes if the tube bundle is typically inserted into the holes 212 and then welded to the tube plate 212. Further, the tube plate 112 has an end section 214 arranged to be inserted into the flange 208 and a top section 216 around which the outer shell is arranged.

The end portion 214 has a groove 218 formed in a surface 220 of the tube plate 112. The surface is typically the peripheral surface of the tube plate 112 and the groove may form a circumferential groove in the tube plate 112. The retaining element 214 can be arranged to be placed in the groove 218 and it can be divided into a first part 222 and a second part 224.

As illustrated, these two parts 222, 224 have a semi annular shape to fit in a respective half of the groove 218. Each of the two parts 222, 224 may have an angular extension of up to 180°. The two parts 222, 224 may have the same size and shape in the radial direction R. The two parts 222, 224 may have the same size and shape in the axial direction A. The two parts 222, 224 may be identical in size and shape.

The flange 208 can have holes 226 arranged to receive the fastening means fed through the holes 210 of the anchoring ring 202 such that, in mounted state, the anchoring ring 202 can abut the flange 208 as illustrated in fig. 2b. The tube plate 112 can have a first O-ring groove 228 and a second O-ring groove 230. This is advantageous in that a so-called floating design can be achieved for the shell tube 302, which will be further described below.

The flange 208 can be provided with a groove 232 arranged to accommodate the retaining element 206. Thus, by having part of the retaining element 206 provided in the first groove 218 in the tube plate 112 and part of the retaining element 206 provided in the groove 232, the tube plate 112 can be held in place via the retaining element 206 when the anchoring ring 208 is attached to the flange 206.

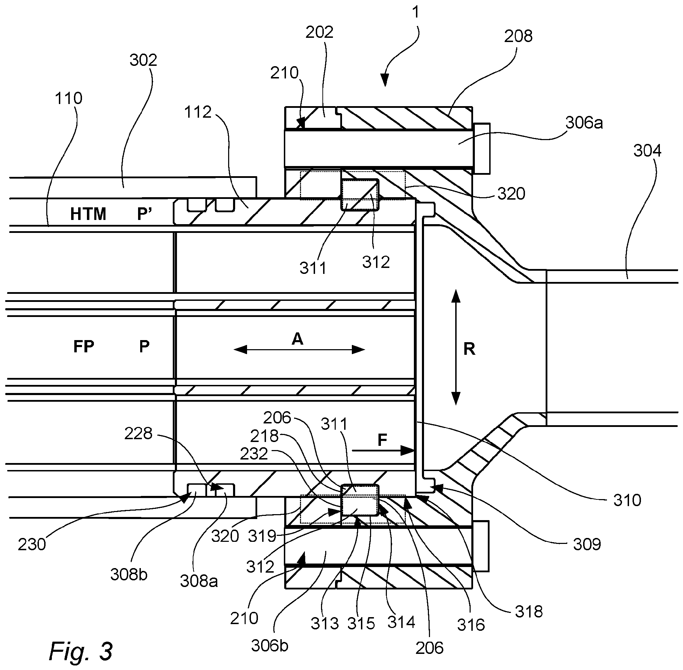

Fig. 3 illustrates a cross-sectional view of the coupling arrangement 1 in the assembled state.

An outer shell 302 surrounds the tube bundle 110 such that the heat transfer media HTM, such as hot water, can be fed between the tube bundle 110 and the outer shell 302. Further, a connection pipe 304 is be attached to the flange 208, and fastening means 306a, 306b, such as bolts, can be used for attaching the flange 208 to the anchoring ring 202. The holes 210 of the anchoring ring 202 may be provided with threads for this purpose. This is advantageous in that the fastening means 306a, 306b can be mounted without the need to reach behind the anchoring ring 202.

To provide for the floating design, that is, allowing the tube bundle 110 to move axially due to heat expansion and retraction, a first O-ring 308a can be provided in the first O-ring groove 228, and a second O-ring 308b can be provided in the second O-ring groove 230. By having these two O-rings, a risk of leakage of the heat transfer media HTM can be reduced.

The retaining element 206 can be held between the tube plate 112, the anchoring ring 202 and the flange 208 as described above and illustrated in Fig 3, i.e. it may be located in the groove 232 in the flange 208. In the flange 208, a seal groove 309 may be provided for accommodating a sealing 310. By the help of this sealing 310 a leakage tight fit between the tube plate 112 and the flange 208 can be achieved.

As illustrated and as described above, part of the retaining element 206 can be accommodated in the first groove 218 of the tube plate 112 and part of the retaining element 206 can be accommodated in the second groove 232 formed by the anchoring ring 202 and the flange 208 in combination. More particularly, an inner section 311 of the retaining element 206 may be accommodated in the first groove 218 and an outer section 312 can be accommodated in the second groove 232. The second groove 232 can have a radial retaining element abutment surface 313, facing the retaining element 214 radially and extending axially. In this way the radial retaining element abutment surface 313 can interact with a peripheral surface 315 of the retaining element 214. As described above, the retaining element 214 can be split in two parts, the first part 222 and the second part 224. As the pressure P inside the tube bundle 110 increases, these two parts cannot move apart since the flange 208 holds them back in the radial direction R.

In addition, the flange 208 has an axial retaining element abutment surface 314, facing the retaining element 214 axially and extending radially. Further, the flange 208 can further be provided with a radial tube plate abutment surface 316, facing the tube plate 112 radially and extending axially, and an axial tube plate abutment surface 318, facing the tube plate 112 axially and extending radially. An advantage with the axial tube plate abutment surface 318 is that this can be arranged to prevent movement of the tube plate 112 in the axial direction A such that a force F exerted by the tube plate 112 onto the sealing 310 is reduced.

The anchoring ring 202 may have an axial retaining element abutment surface 319 provided opposite to the axial retaining element abutment surface 314. The axial retaining element abutment surface 314 and the opposite axial retaining element abutment surface 319 provide for that the retaining element 206 is prevented to move in the axial direction A.

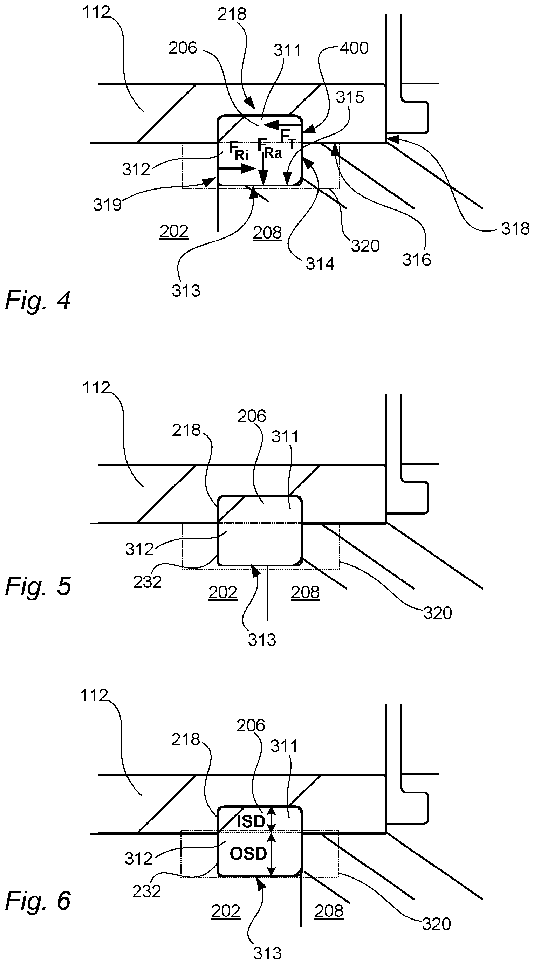

As illustrated, the second groove 232 comprises the radial retaining element abutment surface 313 and the axial retaining element abutment surface 314, and the opposite axial retaining element abutment surface 319 is part of the anchoring ring 202. This is however only one out of several possibilities how a second groove section 320, that is, a section of the coupling arrangement 1 in which the second groove 232 is provided, can be embodied. Other possibilities are illustrated in fig. 5 and 6, and will be described below.

Fig. 4 illustrates how forces can be formed due to the pressure P of the food product FP inside the tube bundle 110. As illustrated, a tube plate force F_{T} formed by the pressure P inside the tube bundle 110 can be exerted onto an inner section 311 of the retaining element 206. The tube plate force F_{T} can be transferred via the tube plate 112 and an inner axial retaining element abutment surface 400 of the first groove 218. A radial force F_{Ra} may also be formed by the pressure P and transferred via the tube plate 112. As illustrated, the radial force F_{Ra} can provide for that the retaining element 124 is pushed onto the radial retaining element abutment surface 313. In addition, due to the tube plate force F_{T}, the retaining element 206 may pushed towards the anchoring ring 202, more particularly the opposite axial retaining element surface 319 of the anchoring ring 202, such that an anchoring ring force F_{Ri} is formed. Even though not illustrated, other forces may be exerted onto the retaining element 206.

As illustrated in fig. 3 and 4, the radial retaining element abutment surface 313 may be formed by the flange 208. Another option, illustrated in fig. 5, is that that this surface is formed partly by the flange 208 and partly by the anchoring ring 202. Still an option, illustrated in fig. 6, is that the radial retaining element abutment surface 313 is formed by the anchoring ring 202 solely. This means that the groove that accommodates the outer section 312 of the retaining element 206 may be either formed in the flange 208 (Figs 3 and 4), in the flange 208 in combination with the anchoring ring 202 (Fig. 5), or in the anchoring ring 202 (Fig. 6).

Further, as illustrated in fig. 6, an inner section depth ISD of the inner section 311 may be less than an outer section depth OSD of the outer section 312. This applies for all embodiments described herein.

Even though referring to different surfaces herein as abutment surfaces, this should not be understood as that the retaining element 206 at all times is in contact with these surfaces, but instead it should be understood as that the surfaces are arranged to abut the retaining element 206 if conditions require for holding the retaining element 206 in place, that is, holding the retaining element 214 within the first and second groove 218, 232.

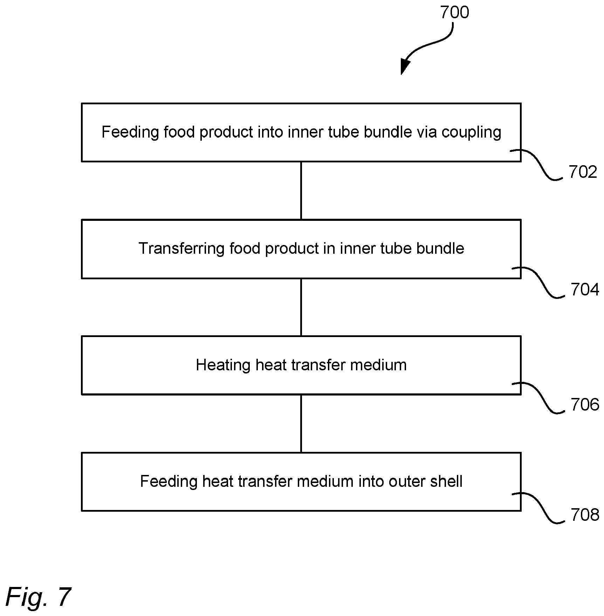

Fig. 7 is a flow chart comprising steps of a method 700 for heat treating the food product FP. The method may be performed with the tubular heat exchanger 100. In a first step 702 of the method, the food product FP is fed from the connection pipe 304 into the tube bundle 110 of the tubular heat exchanger 100 via the coupling arrangement 1 described above. In a second step 704, the food product FP can be transferred from through the tube bundle 110. In a third step 706, the heat transfer medium HTM can be heated. In a fourth step 708, which may occur at the same time as the second step 704, the heat transfer media HTM can be fed into the outer shell 302 which encloses the tube bundle 110 such that the food product FP is heated to reduce microorganisms in the food product FP, i.e. reduce a number of microorganisms in the food product FP that may otherwise lead to health issues for consumers. The pressure P inside the tube bundle 110 may be above 200 bar and a pressure P' in the outer shell 302 may be below 30 bar.

From the description above follows that, although various embodiments of the invention have been described and shown, the invention is not restricted thereto, but may also be embodied in other ways within the scope of the subject-matter defined in the following claims.

## Claims

1. A coupling arrangement (1) comprising
a tube plate (112) arranged to be attached to a tube bundle (110),
a first groove (218) formed in a surface (220) of the tube plate (112),
a flange (208) arranged to accommodate an end section (214) of the tube plate (112), and provided with holes (226) for receiving fastening means (306a, 306b),
an anchoring ring (202) arranged to be placed around the tube plate (112) and provided with holes (210) for receiving the fastening means (306a, 306b) for attachment to the flange (208),
a retaining element (206) comprising an inner section (311) and an outer section (312), wherein the inner section (311) is arranged be placed in the first groove (218) of the tube plate (112), wherein the retaining element (206) comprises a first part (222) and a second part (224), and
a second groove (232) formed by the flange (208) and the anchoring ring (202) in combination, and arranged to accommodate the outer section (312) of the retaining element (206), **characterized in that**
each of the first part (222) and the second part (224) of the retaining element (206) has a semi annular shape.

2. The coupling arrangement (1) according to claim 1, wherein at least one of the flange (208) and the anchoring ring (202) is provided with a radial retaining element abutment surface (313) for preventing radial movement of the retaining element (206) when the anchoring ring (202) is attached to the flange (208).

3. The coupling arrangement (1) according to any one of the preceding claims, wherein the flange (208) is provided with a radial tube plate abutment surface (316) and an axial tube plate abutment surface (318) arranged to face the tube plate (112).

4. The coupling arrangement (1) according to claim 3, wherein the flange (208) is provided with a seal groove (309) arranged to accommodate a sealing (310), wherein the axial tube plate abutment surface (318) is arranged to prevent movement of the tube plate (112) in an axial direction (A), thereby reducing a force (F) exerted by the tube plate (112) onto the sealing (310).

5. The coupling arrangement (1) according to any one of the preceding claims, wherein an outer section depth (OSD) of the outer section (312) is greater than an inner section depth (ISD) of the inner section (311) of the retaining element (206).

6. The coupling arrangement (1) according to any one of the preceding claims, wherein the fastening means (306a, 306b) and the holes (210) of the anchoring ring (202) are threaded and arranged to interact for attaching the anchoring ring (202) to the flange (208).

7. A tubular heat exchanger (100) comprising
a coupling arrangement (1) according to any one of the preceding claims,
a tube bundle (110) comprising a number of tubes that are attached to the tube plate (112) and arranged to transfer a food product (FP), and
an outer shell (302) arranged to enclose the tube bundle (110) and a heat transfer medium (HTM), and
a pipe (304) attached to the flange (208).

8. A method (700) for heat treating a food product (FP) with a tubular heat exchanger according to claim 7, wherein the food product has a viscosity greater than 100 cP at temperature of 40 °C, said method comprising
feeding (702) the food product (FP) from the pipe (304) into the tube bundle (110) via the coupling arrangement (1),
transferring (704) the food product (FP) through the tube bundle (110),
heating (706) a heat transfer medium (HTM), and
feeding (708) the heat transfer medium (HTM) into the outer shell (302), such that the food product (FP) is heated to reduce microorganisms in the food product (FP).

9. The method according to claim 8, wherein a pressure (P) inside the tubes of the tube bundle (110) is above 200 bar.

10. The method according to claim 8 or 9, wherein a pressure (P) in the outer shell (302) is below 30 bar.

## Patentansprüche

1. Kopplungsanordnung (1), umfassend
eine Rohrplatte (112), dazu angeordnet, an einem Rohrbündel (110) befestigt zu werden,
eine erste Nut (218), ausgebildet in einer Oberfläche (220) der Rohrplatte (112),
einen Flansch (208), angeordnet zum Aufnehmen eines Endabschnitts (214) der Rohrplatte (112) und versehen mit Löchern (226) zum Empfangen von Befestigungsmitteln (306a, 306b),
einen Verankerungsring (202), dazu angeordnet, um die Rohrplatte (112) gelegt zu werden und versehen mit Löchern (210) zum Empfangen der Befestigungsmittel (306a, 306b) zum Befestigen an dem Flansch (208),
ein Halteelement (206), umfassend einen inneren Abschnitt (311) und einen äußeren Abschnitt (312), wobei der innere Abschnitt (311) dazu angeordnet ist, in der ersten Nut (218) der Rohrplatte (112) platziert zu werden, wobei das Halteelement (206) einen ersten Teil (222) und einen zweiten Teil (224) umfasst, und
eine zweite Nut (232), ausgebildet durch den Flansch (208) und den Verankerungsring (202) in Kombination und dazu angeordnet, den äußeren Abschnitt (312) des Halteelements (206) aufzunehmen, **dadurch gekennzeichnet, dass**
jeder des ersten Teils (222) und des zweiten Teils (224) des Halteelements (206) jeweils eine halbringförmige Form aufweist.

2. Kopplungsanordnung (1) nach Anspruch 1, wobei mindestens einer von dem Flansch (208) und dem Verankerungsring (202) mit einer radialen Halteelementanlageoberfläche (313) versehen ist, um eine radiale Bewegung des Halteelements (206) zu verhindern, wenn der Verankerungsring (202) an dem Flansch (208) befestigt ist.

3. Kopplungsanordnung (1) nach einem der vorhergehenden Ansprüche, wobei der Flansch (208) mit einer radialen Rohrplattenanlageoberfläche (316) und einer axialen Rohrplattenanlageoberfläche (318) versehen ist, die so angeordnet sind, dass sie der Rohrplatte (112) zugewandt sind.

4. Kopplungsanordnung (1) nach Anspruch 3, wobei der Flansch (208) mit einer Dichtungsnut (309) versehen ist, die so angeordnet ist, dass sie eine Dichtung (310) aufnimmt, wobei die axiale Rohrplattenanlageoberfläche (318) so angeordnet ist, dass sie eine Bewegung der Rohrplatte (112) in einer Axialrichtung (A) verhindert, wodurch eine Kraft (F) verringert wird, die von der Rohrplatte (112) auf die Dichtung (310) ausgeübt wird.

5. Kopplungsanordnung (1) nach einem der vorhergehenden Ansprüche, wobei eine äußere Abschnittstiefe (OSD) des äußeren Abschnitts (312) größer ist als eine innere Abschnittstiefe (ISD) des inneren Abschnitts (311) des Halteelements (206).

6. Kopplungsanordnung (1) nach einem der vorhergehenden Ansprüche, wobei die Befestigungsmittel (306a, 306b) und die Löcher (210) des Verankerungsrings (202) mit einem Gewinde versehen und so angeordnet sind, dass sie zum Befestigen des Verankerungsrings (202) an den Flansch (208) zusammenwirken.

7. Rohrwärmetauscher (100), umfassend:
eine Kopplungsanordnung (1) nach einem der vorhergehenden Ansprüche,
ein Rohrbündel (110), umfassend eine Anzahl von Rohren, die an der Rohrplatte (112) befestigt und zum Übertragen eines Lebensmittelprodukts (FP) angeordnet sind, und
eine Außenhülle (302), die so angeordnet ist, dass sie das Rohrbündel (110) und ein Wärmeübertragungsmedium (HTM) umschließt, und
ein Rohr (304), das an dem Flansch (208) befestigt ist.

8. Verfahren (700) zum Wärmebehandlen eines Lebensmittelprodukts (FP) mit einem Rohrwärmetauscher nach Anspruch 7, wobei das Lebensmittelprodukt bei einer Temperatur von 40 °C eine Viskosität von über 100 cP aufweist, das Verfahren umfassend:
Zuführen (702) des Lebensmittelprodukts (FP) aus dem Rohr (304) in das Rohrbündel (110) über die Kopplungsanordnung (1),
Übertragen (704) des Lebensmittelprodukts (FP) durch das Rohrbündel (110),
Erwärmen (706) eines Wärmeübertragungsmediums (HTM) und
Zuführen (708) des Wärmeübertragungsmediums (HTM) in die Außenhülle (302), sodass das Lebensmittelprodukt (FP) erhitzt wird, um Mikroorganismen in dem Lebensmittelprodukt (FP) zu reduzieren.

9. Verfahren nach Anspruch 8, wobei ein Druck (P) innerhalb der Rohre des Rohrbündels (110) über 200 bar beträgt.

10. Verfahren nach Anspruch 8 oder 9, wobei ein Druck (P) in der Außenhülle (302) unter 30 bar beträgt.

## Revendications

1. Agencement de couplage (1) comprenant
une plaque de tube (112) agencée pour être attachée à un faisceau de tube (110),
une première rainure (218) formée dans une surface (220) de la plaque de tube (112),
un rebord (208) agencé pour accueillir une section d'extrémité (214) de la plaque de tube (112), et pourvu de trous (226) pour recevoir un moyen de fixation (306a, 306b),
un anneau d'ancrage (202) agencé pour être placé autour de la plaque de tube (112) et pourvu de trous (210) pour recevoir le moyen de fixation (306a, 306b) destiné à être attaché au rebord (208),
un élément de retenue (206) comprenant une section intérieure (311) et une section extérieure (312), la section intérieure (311) étant agencée pour être placée dans la première rainure (218) de la plaque de tube (112), l'élément de retenue (206) comprenant une première partie (222) et une deuxième partie (224), et une deuxième rainure (232) formée par le rebord (208) et l'anneau d'ancrage (202) combinés, et agencée pour accueillir la section extérieure (312) de l'élément de retenue (206), **caractérisé en ce que**
chacune de la première partie (222) et de la deuxième partie (224) de l'élément de retenue (206) a une forme semi-annulaire.

2. Agencement de couplage (1) selon la revendication 1, dans lequel au moins un élément parmi le rebord (208) et l'anneau d'ancrage (202) est pourvu d'une surface de butée d'un élément de retenue radial (313) pour empêcher un déplacement radial de l'élément de retenue (206) lorsque l'anneau d'ancrage (202) est attaché au rebord (208).

3. Agencement de couplage (1) selon l'une quelconque des revendications précédentes, dans lequel le rebord (208) est pourvu d'une surface de butée d'une plaque de tube radiale (316) et d'une surface de butée d'une plaque de tube axiale (318) agencées pour faire face à la plaque de tube (112).

4. Agencement de couplage (1) selon la revendication 3, dans lequel le rebord (208) est pourvu d'une rainure de scellement (309) agencée pour accueillir un scellement (310), la surface de butée de la plaque de tube axiale (318) étant agencée pour empêcher un déplacement de la plaque de tube (112) dans une direction axiale (A), réduisant ainsi une force (F) exercée par la plaque de tube (112) sur le scellement (310) .

5. Agencement de couplage (1) selon l'une quelconque des revendications précédentes, dans lequel une profondeur de la section extérieure (OSD, *outer section depth*) de la section extérieure (312) est supérieure à une profondeur de la section intérieure (ISD, *inner section depth*) de la section intérieure (311) de l'élément de retenue (206).

6. Agencement de couplage (1) selon l'une quelconque des revendications précédentes, dans lequel le moyen de fixation (306a, 306b) et les trous (210) de l'anneau d'ancrage (202) sont taraudés et agencés pour interagir afin d'attacher l'anneau d'ancrage (202) au rebord (208) .

7. Échangeur de chaleur tubulaire (100) comprenant
un agencement de couplage (1) selon l'une quelconque des revendications précédentes,
un faisceau de tube (110) comprenant un certain nombre de tubes qui sont attachés à la plaque de tube (112) et agencés pour transférer un produit alimentaire (FP, *food product*), et
une coque extérieure (302) agencée pour contenir le faisceau de tube (110) et un agent de transfert de chaleur (HTM, *heat transfer medium*), et
un tuyau (304) attaché au rebord (208).

8. Procédé (700) de traitement thermique d'un produit alimentaire (FP) avec un échangeur de chaleur tubulaire selon la revendication 7, dans lequel le produit alimentaire a une viscosité supérieure à 100 cP à une température de 40 °C, ledit procédé comprenant
l'alimentation (702) du produit alimentaire (FP) depuis le tuyau (304) jusque dans le faisceau de tube (110) via l'agencement de couplage (1),
le transfert (704) du produit alimentaire (FP) à travers le faisceau de tube (110),
le chauffage (706) d'un agent de transfert de chaleur (HTM), et
l'alimentation (708) de l'agent de transfert de chaleur (HTM) jusque dans la coque extérieure (302), de telle sorte que le produit alimentaire (FP) soit chauffé pour réduire les micro-organismes dans le produit alimentaire (FP).

9. Procédé selon la revendication 8, dans lequel une pression (P) à l'intérieur des tubes du faisceau de tube (110) est de plus de 200 bar.

10. Procédé selon la revendication 8 ou la revendication 9, dans lequel une pression (P) dans la coque extérieure (302) est de moins de 30 bar.
